Europäisches Patentamt

European Patent Office

Office européen des brevets

(19)

(11) Publication number: **0 137 597**
**A2**

# (12) EUROPEAN PATENT APPLICATION

(21) Application number: **84304848.9**

(22) Date of filing: **17.07.84**

(51) Int. Cl.⁴: **B 60 T 11/22**

(30) Priority: **26.08.83 US 526668**

(43) Date of publication of application:
**17.04.85 Bulletin 85/16**

(84) Designated Contracting States:
**DE FR GB**

(71) Applicant: **GENERAL MOTORS CORPORATION**
General Motors Building 3044 West Grand Boulevard
Detroit Michigan 48202(US)

(72) Inventor: **Brademeyer, David Lee**
1568 Langdon Drive
Centerville Ohio, 45459(US)

(74) Representative: **Breakwell, John Neil Bower et al,**
GM Patent Section Luton Office (F6) P.O. Box No. 3
Kimpton Road
Luton Beds. LU2 OSY(GB)

(54) **Quick take-up brake master cylinder assembly.**

(57) A quick take-up brake master cylinder assembly includes a compensation control and blow-off valve unit 84 or 88.

In one embodiment, a stamped valve body 118 forms a valve member 113 within a valve chamber 104 which permits compensation flow from the master cylinder reservoir chamber 68 to the pressurizing chambers 34. An O-ring seal 130 controls a passage 134 from the valve chamber to the reservoir chamber, and acts as a valve to open the passage at a predetermined quick take-up pressure to return fluid to the reservoir.

Other embodiments use an umbrella valve 22 or a spring-biased ball check valve 144.

The valve housing in some embodiments also retains the reservoir body 40 in a sealed position on the master cylinder housing 12.

EP 0 137 597 A2

./...

Fig.1

QUICK TAKE-UP BRAKE MASTER CYLINDER ASSEMBLY

This invention relates to a quick take-up brake master cylinder assembly as specified in the preamble of claim 1, for example as disclosed in US-A-4 208 881.

A quick take-up brake master cylinder assembly may utilize a blow-off valve which permits the build-up of quick take-up pressure to a predetermined point, after which the quick take-up chamber is connected to the master cylinder reservoir and the blow-off pressure is reduced substantially, for example to approximately one-half of its original value. This reduces the portion of the master cylinder actuating force required during the remainder of the stroke to force fluid in the quick take-up chamber through the blow-off valve. Such an arrangement is disclosed in the said US-A-4 208 881, and a somewhat different arrangement of this type is disclosed in GB-A-2 102 517.

The blow-off valve assembly of US-A-4 208 881 has a two-part valve housing formed by a valve seat member and a valve body, with a ball check valve and spring, and a cup seal which is somewhat intricately constructed to also act as a seal between the seat member and the body, and assist in joining the two together.

The arrangement disclosed in the above GB-A-2 102 517 includes a one-piece stamped element in place of the ball and spring, and eliminates the need for a valve seat member separate from the body. The valve chamber that is required in the assembly of US-A-4 208 881 is not within the interior of the unit, and much simplification is thereby obtained. The bypass passage is formed as a part of the valve member, which is part of the one-piece stamped element. A cup seal is used which is similar to that used in US-A-4 208 881. In both of the above-noted disclosures, the reservoir housing is fastened to the master cylinder body by means independent of the valve unit.

The quick take-up master cylinder is effective to take up excessive pedal travel by the use of a two-stage bore and piston arrangement. It permits the use of increased brake lining clearances, particularly in disc brakes, thus improving fuel mileage. It reduces brake pedal effort for manual brake actuation by the use of a smaller master cylinder bore diameter for generating high braking pressures after the brake linings have engaged the brake discs or drums. This can avoid the need for power brake boosters in some cars.

The master cylinder has a stepped bore and a stepped piston defining a large-volume chamber and a smaller-volume chamber. The large chamber is effective at the beginning of the stroke and in the lower pressure range: it displaces a large volume of fluid at relatively low pressure, which takes up brake lining clearances with a relatively small amount of brake pedal travel. Brake fluid is forced from the large-volume quick take-up chamber around the lip of the primary piston seal into the high-pressure chamber as the stroke of the master cylinder piston increases in the brake apply direction. Fluid pressure builds up in the quick take-up chamber to a point that causes the blow-off valve to open and permit passage of substantial quantities of fluid from the quick take-up chamber to the master cylinder reservoir. During the return stroke of the master cylinder piston, excess fluid that has passed from the quick take-up chamber is restored by the flow of fluid from the reservoir around the lip of a compensating seal valve. The blow-off valve is held in the closed position when the master cylinder is in the fully released, at-rest position, but a bypass orifice permits limited passage of brake fluid from the high-pressure chamber and the quick take-up chamber into the master cylinder reservoir. Such passage may occur due to temperature changes of the brake fluid or parts of the brake system, for example, providing for delayed pressure equalization.

The present invention is concerned with a quick take-up brake master cylinder assembly having a simplified form of valve assembly.

Accordingly, a quick take-up brake master cylinder assembly in accordance with the present invention is characterised by the features specified in the characterising portion of claim 1.

Such an arrangement also has the potential for the inclusion of useful novel features. For example, the valve assembly may additionally serve the purpose of retaining the reservoir housing on the master cylinder housing: it may for example include an external flange portion for this purpose.

The new form of valve assembly also offers greater potential flexibility in the choice of the check valves. For example, an umbrella-type check valve or an O-ring type check valve can readily be utilised, or a check valve could alternatively comprise a spring-loaded ball-type check valve or utilise a resilient cantilever-type arm embodying the valve element.

In one embodiment of a quick take-up brake master cylinder assembly in accordance with the present invention, a valve housing receives a stamped valve body the valve of which permits compensation flow from the reservoir to the master cylinder chambers. The valve housing also has a check valve in the form of an O-ring seal covering one or more openings in the valve housing and permitting flow from the master cylinder chambers to the reservoir. Other embodiments of the present invention provide a combined valve housing arrangement, with the control valves having similar functions.

The valve housing may also serve to attach the reservoir housing to the master cylinder housing. This simplifies the moulding operation used in the construction of the reservoir housing, and also the assembly operation.

The valve permitting flow from the reservoir to the master cylinder chambers may be a spring-biased check valve within the valve housing, or it may alternatively be an umbrella-type check valve, for example. A check valve arrangement can open to permit fluid flow back to the reservoir: a cantilever spring-type check valve, for example, is suitable for this purpose, or the O-ring valve arrangement noted above could alternatively be utilised.

In the drawing:

Figure 1 is a side view, with parts broken away and in section, of one embodiment of a quick take-up brake master cylinder assembly in accordance with the present invention, the master cylinder being illustrated as being in its fully released condition;

Figure 2 is a fragmentary enlarged view, with parts broken away and in section, illustrating a modification of a compensation control and blow-off unit forming part of the master cylinder assembly of Figure 1;

Figure 3 is a view similar to Figure 2, but showing another modification of the compensation control and blow-off unit;

Figure 4 is a fragmentary cross-sectional view of the unit of Figure 3, on the line 4-4 of that Figure, in the direction of the arrows; and

Figure 5 is a fragmentary cross-sectional view of the unit of Figure 3, on the line 5-5 of that Figure, in the direction of the arrows.

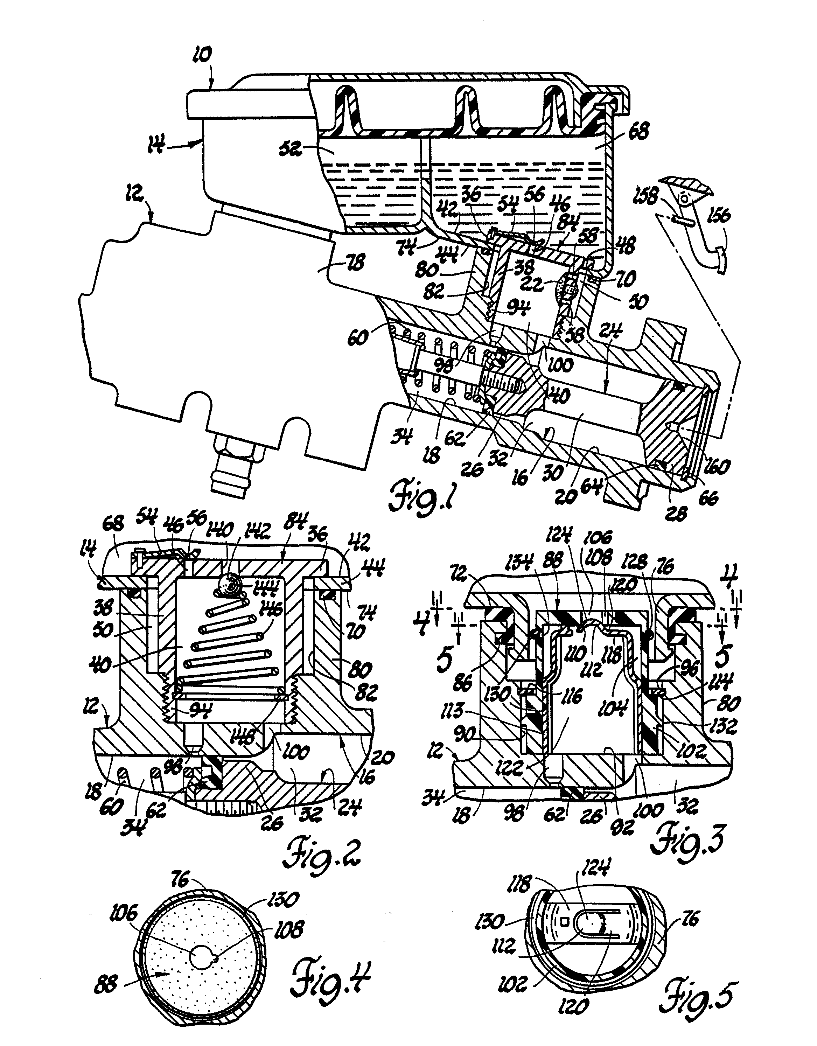

With reference now to the drawing, Figure 1 shows a brake master cylinder assembly 10 which includes a housing 12 and a reservoir body 14. The housing has a stepped bore 16 formed therein with a smaller-diameter forward section 18 and a larger-diameter rear section 20.

The master cylinder is shown as being of the dual circuit type, and is accordingly provided with two pressurizing pistons. The forward piston (not shown) is the secondary piston and is reciprocably received in the forward section 18 of the bore 16. The rear piston 24 is the primary piston and is a stepped piston: it has a forward piston head 26 that is formed as a piston land and is reciprocably received in the rear portion of the forward section 18 of the bore, and it also has a rear piston head 28 that is formed as a land and is reciprocably received in the rear section 20 of the bore. The piston heads 26 and 28 are interconnected by means of a reduced-diameter section 30.

The rear (primary) piston 24 co-operates with the bore 16 to define a high-volume, quick take-up chamber 32 between the piston heads 26 and 28. A rear high-pressure pressurizing chamber 34 is defined by the rear part of the bore section 18, the piston head 26 and the rear end of the secondary piston. A forward high-pressurizing chamber (not shown) is defined by the forward end of the secondary piston and a front portion of the forward section 18 of the bore. Outlets are provided in the housing 12 to deliver brake fluid pressurized in the high-pressure pressurizing chambers to separate brake circuits in a manner well known in the art.

A brake fluid reservoir chamber 52 is connected by way of compensation ports in a boss 78 to the forward section 18 of the bore to provide communication between the forward high-pressure pressurizing chamber and the reservoir chamber 52. A piston return spring 60 in the rear pressurizing chamber 34 continually urges the rear piston 24 towards its released position. The spring 60 is a caged spring, as is well known in the art, which when extended to its permitted limit also establishes the release position of the secondary piston.

A cup seal 62 is mounted on the forward side of the piston head 26 of the primary piston 24. The cup seal 62 is arranged to prevent fluid flow from the rear pressurizing chamber 34 to the quick take-up chamber 32, while acting as a check valve which permits fluid flow from the chamber 32 to the chamber 34 around the outer periphery of the piston head 26 and the lip of the cup seal 62 while pressure in the chamber 32 is greater than pressure in the chamber 34. A seal 64 is mounted on the piston head 28 to seal the rear end of the quick take-up chamber 32. A piston stop 66 is provided in the open end of the larger-diameter rear section 20 of the bore, and forms an abutment that is engaged by the piston head 28 when the master cylinder is in its fully released condition.

The reservoir body 14 has, in addition to the reservoir chamber 52 for the forward pressurizing chamber, a fluid chamber 68 for the chambers 32 and 34.

In the arrangement shown in Figure 3, the reservoir body is secured to the master cylinder housing 12 by the use of an annular retaining and sealing means 72 which co-operates with a short mounting tube 76 formed as a part of the reservoir body 14. The retaining and sealing means 72 and the mounting tube 76 and similar devices associated with the chamber 52 are received in respective annular bosses 80 and 78 formed as a part of the housing 12.

The boss 80 of Figure 3 has a recess 86 which receives the annular retaining and sealing means 72 and the mounting tube 76. The recess 86 is also a valve unit chamber receiving a compensation control and blow-off valve unit 88. The lower portion of the recess 86 forming the valve unit chamber has a side wall 90, a bottom surface 92 and an annular groove 96. A compensation port 98 is formed through the bottom surface 92 and opens into the rear end of the forward section 18 of the bore. The compensation port 98 is so positioned that in the fully released position of the cup seal 62 it opens into the pressurizing chamber 34, but it is closed during the initial brake apply movement of the piston 24 by the lip of the cup seal 62. A compensation port 100 extends through the bottom surface 92 and into the larger-diameter quick take-up chamber 32.

The boss 80 of the arrangement shown in Figure 1 is somewhat similarly constructed. It has a recess 82 which is also a valve unit chamber receiving a compensation control and blow-off valve unit 84. Compensation ports 98 and 100 correspond to those shown in Figure 3. The valve unit 84 is threaded at its lower end 94 into the bottom portion of the recess 82. The valve unit 84 has a flanged cap 36 attached to or formed as a part of a cylindrical portion 38 at the opposite end from the threaded end 94 of the valve unit 84 so that it provides an end cover for a chamber 40 contained within the valve unit 84. The flange of the cap 36 engages the upper surface 42 of the base 44 of the reservoir chamber 68, and the valve unit 84 extends through an opening in the reservoir base. The valve unit 84 is tightened to secure the reservoir body 14 in position on the boss 80, with a seal 70, provided in a groove in the upper end of the boss 80, sealing against the lower surface 74 of the reservoir base 44.

An opening 46 provided in the central region of the flanged cap 36 provides communication between the fluid chamber 68 of the reservoir body and the chamber 40 inside the valve unit 84. The outer portion of the flange of the cap 36 has an opening 48 which opens into an annular chamber 50 defined by the outer wall of the cylindrical portion 38 of the valve unit and the portion of the recess 32 above the threaded portion receiving the threaded end 94. A spring-loaded valve 54 is attached to the flange 36, and co-operates with the opening 46 to substantially close that opening while permitting fluid pressure within the chamber 40 to move the valve so as to permit a greater flow rate through the opening 46 under certain circumstances. The spring-loaded valve 54 is provided with a small orifice 56 fitting over the opening 46 to provide a controlled leak which accommodates delayed pressure equalization between the reservoir chamber 68 and the quick take-up chamber 32 during a static pressure condition. The cylindrical portion 38 of the valve unit 84 has one or more openings 58 therethrough interconnecting the chambers 40 and 50. An umbrella-type check valve 22 fits over openings 58 on the side of the chamber 40 so as to permit flow from the chamber 50 to the chamber 40 but to prevent flow from the chamber 40 by way of the openings 58 to the chamber 50.

The valve unit 88 of Figure 3 includes a recessed valve housing 102 having a chamber 104 formed therein and a passage 106 formed axially through the top of the valve body. The passage 106 is circular with an offset portion 108 providing a controlled leak to be described. The passage 106 opens into the reservoir chamber 68 by way of the mounting tube 76. The lower end of the passage 106 defines a valve seat 110. A further valve seat 112 is formed on the generally closed end of a stamped valve body 118 formed as a generally U-shaped valve body 113 which fits within the valve housing 102.

A valve housing and valve retainer 114 is received in the annular groove 96 and engages a shoulder 116 on the valve housing 102. The top of the valve body 113 is formed to provide a resiliently yieldable cantilever spring tongue portion 120, as well as the valve seat 112, which is formed on the free end of the tongue portion 120. The valve seat 112 mates in valve-closing relation with the valve seat 110 to provide a normally closed check valve 124 for the lower end of the passage 106. The offset portion 108 of the passage 106 provides a restricted flow passage through the top of the valve housing 102 and provides a continuously open passage between a chamber 122 of the valve housing 102 and the reservoir chamber 68, so restrictively by-passing the normally closed valve 124 between the reservoir 68 and the quick take-up chamber 32. The passage portion 108 provides a controlled leak which accommodates delayed pressure equalization between the reservoir chamber 68 and the quick take-up chamber 32 during a static pressure condition.

The valve seat 112 has its upper side exposed to fluid in the reservoir chamber 68 and its lower side continuously exposed to fluid in the quick take-up chamber 32 of the master cylinder bore by way of the compensation port 100 and the chamber 122. A flange 132 is formed around the central part of the valve housing 102 and sealingly mates with the side wall 90 of the recess 86.

One or more openings 134 are formed through the side wall of the valve housing 102 to connect the chamber 122 to the chamber 68, by-passing the check valve 124. An annular groove 128 extending around the valve housing 102 has the outer ends of the openings 134 opening into it. An O-ring seal 130 fits within the groove 128 in light tension so that it normally closes the openings 134. Fluid is prevented from flowing from the chamber 68 through the passages 134 past the O-ring seal 130 into the chamber 122, but when there is a higher pressure in the chamber 122 than in the chamber 68 the O-ring seal 130 acts as a valve permitting flow from the chamber 122 into the chamber 68 when only a small pressure differential exists between the chambers.

Figure 2 shows a modified arrangement of the valve mechanism of Figure 1. It uses the same type of valve unit, but with a somewhat different check valve arrangement. The flanged cap 36 has an opening 140 in the centre of the cap portion covering the chamber 40, the lower end of this opening providing a valve seat 142. A check valve 144 is contained within the chamber 40 adjacent the valve seat 142, and is normally in engagement with the valve seat due to a valve spring 146 in the chamber 40 which acts on the valve 144 to continually urge the valve towards the valve seat 142. A snap ring 148 is positioned in an internal groove in the threaded lower end portion 94 of the valve unit 84 to provide reaction for the spring 146. In this arrangement, the check valve 144 controls the flow of brake fluid through the opening 140 directly from the reservoir chamber 68 into the chamber 40 and to the compensation ports 98 and 100. The check valve 144 prevents any flow through the opening 140 in the reverse direction. The opening 46 and the spring-loaded valve 54 function in the same manner as shown and described in the arrangement of Figure 1.

The master cylinder assembly 10 is arranged to be actuated by a vehicle operator by means of a brake pedal 156 actuating a push rod 158 which engages the rear end 160 of the primary piston 24. Upon initial brake apply movement of the piston 24, the volume of the quick take-up chamber 32 decreases, and fluid is pushed past the cup seal 62 into the chamber 34. The cup seal 62 moves to close off the compensation port 98 so that pressure can be obtained in the chamber 34. Since the valve member 54 or 112 is seated on its valve seat, fluid flow between the quick take-up chamber 32 and the reservoir chamber 68 through the passage 46 or 106 is substantially prevented, with only a very small flow passing through the orifice-like passage 56 or 108. Thus pressurization of the fluid in the chamber 32 can occur in a substantially undiminished manner. Fluid is being replaced from the quick take-up chamber 32 at a relatively large volume but low pressure. This fluid flows past the cup seal 62, into the pressurizing chamber 34, and through the outlet of that chamber to the brake circuit connected to that outlet. The pressure also acts on the rear end of the usual secondary piston (which is not shown) to move that piston forwardly so that its cup seal closes its compensation port and fluid pressurization begins in its pressurizing chamber, as is well known. Fluid so pressurized goes through the other outlet to the brake circuit connected to that outlet.

In a brake system in which disc brakes are used on the front vehicle wheels only, the disc brake actuating circuit would be connected to the outlet of the chamber 34, thus taking advantage of the high volume of fluid being delivered through that outlet to provide for quick take-up of the brake linings so that they move quickly to engage the brake discs.

The pressure generated in the quick take-up chamber 32 acts on the lower surface of the valve 54 across the effective area at its valve seat, whereas the upper side of the valve is exposed to reservoir pressure, which is usually substantially atmospheric pressure. In the arrangement of Figure 3, the pressure generated in the chamber 32 acts on the O-ring seal valve 130 across the effective area of the end of the passage 134.

As the pressure in the quick take-up chamber 32 increases, it reaches a point at which the pressure differential acting on the valve 54 or 130 overcomes the resilient closing force acting thereon, so moving the valve to fully open the passage 46 or 134 to the reservoir chamber 68, and fully communicating the quick take-up chamber 32 with the reservoir chamber 68. Once the valve 54 or 130 moves so that it leaves its valve seat, the pressure from the quick take-up chamber 32 acts on a greater portion of the surface of the valve, thereby permitting a reduction in pressure in the quick take-up chamber 32 without permitting closure of the valve 54 or 130. The valve 54 or 130 will close when the pressure in the quick take-up chamber 32 approaches the pressure in the reservoir chamber 68, with the passage 56 or 108 providing for minor equalization.

Further master cylinder actuation causes pressures to be generated in the primary and secondary pressurizing chambers at a high rate relative to the amount of stroke, since the brake circuits no longer require any appreciable fluid volume. The pressurization then depends primarily on the brake force exerted, without requiring much brake pedal travel.

Upon brake release, the pressurizing pistons move to the right as viewed in Figure 1. Any required compensating fluid for the forward pressurizing chamber will flow through its compensation port from the reservoir chamber 52, as is well known. Fluid required for compensation of the pressurizing chamber 34 will flow from the reservoir chamber 68 through the passage 58 or 140 or 106 of Figures 1, 2 and 3 respectively, and through the chamber 40 or 122 to the compensation port 98. The fluid will then flow past the cup seal 62 into the chamber 34. Fluid flowing through the compensation port 100 also flows into the quick take-up chamber 32. This chamber requires a relatively large amount of compensating fluid, since the volume of this chamber 32 increases rapidly upon brake release. The passages and chambers provided are sufficient for this purpose.

As the master cylinder reaches its fully released position, the secondary piston cup seal will open its compensation port so that the forward pressurizing chamber is directly connected to the reservoir chamber 52, as is well known. The cup seal 62 will open the compensation port 98 so that the pressurizing chamber 34 is directly connected to the chamber 40 of Figures 1 and 2 or the chamber 122 of Figure 3. Any temperature changes requiring fluid compensation after the brakes have been released are readily permitted, since both pressurizing chambers have open lines of fluid communication with the reservoir chambers of the reservoir body directly through their associated compensation ports, with the compensation port 98 being in fluid communication with the reservoir chamber 68 through the orifice passage 56 of Figures 1 and 2, or the passage 108 of Figure 3.

Claims:

1. A quick take-up brake master cylinder assembly having a brake fluid reservoir housing (14) defining a reservoir chamber (68), a master cylinder housing (12) with a bore (16) therein providing a brake quick take-up pressure generating chamber (32) and at least one brake actuating pressure chamber (34), fluid compensation ports (98 and 100) in the master cylinder housing (12) operatively communicating with the bore (16) and the reservoir chamber (68), support means (80) formed as a part of the master cylinder housing (12) and providing a mount for the reservoir housing (14), the support means (80) also having a recess (82) providing fluid access between the quick take-up chamber (32) and the reservoir chamber (68) through at least one of the compensation ports (98 and 100), and a quick take-up fluid pressure and flow control valve assembly (84) comprising a valve housing (84) received in the recess (82) of the support means (80), and first and second normally closed brake fluid pressure and flow control valves (54 and 22) disposed to control brake fluid flow and pressure communication between the quick take-up chamber (32) and the reservoir chamber (68), one (54) of the valves (54 and 22) opening at a predetermined increase in brake fluid pressure in the valve chamber (40) generated in the quick take-up chamber (32) and at a pressure value sufficient for brake take-up, and the other (22) of the valves (54 and 22) opening in response to a decrease in brake fluid pressure in the valve chamber (40) below the brake fluid pressure in the reservoir chamber (68) to permit substantially free brake fluid pressure and flow from the reservoir chamber (68) to the valve chamber (40) and thence to the quick take-up chamber (32) through the said at least one of the compensation ports (98 and 100), characterised in that the valve housing (84) of the quick take-up fluid pressure and flow control valve assembly (84) comprises a generally cylindrical wall portion (38) closed at its upper end by a cap portion (36) forming an end cover, with the cylindrical wall portion (38) and the cap portion (36) together defining, within the valve housing (84), a valve chamber (40) that openly communicates with the quick take-up brake chamber (32) by way of at least one of the compensation ports (98 and 100), at least two passages (46 and 58) are formed through the valve housing (84) to provide controlled brake fluid communication between the valve chamber (40) and the reservoir chamber (68), and the first and second brake fluid pressure and flow control valves (54 and 22) are respectively associated with different ones (46 and 58) of the said at least two passages (46 and 58) to control brake fluid flow and pressure through the said passages (46 and 58), the said valves (54 and 22) each including a movable valve member mounted on and supported by the valve housing (84), a valve seat formed by an integral part of the valve housing (84) at the end of the respective one of the said passages (46 and 58), and yieldable valve biasing means, which may comprise a part of the respective valve member, continuously urging the respective valve members towards a position of engagement with their respective valve seats.

　　　2.　A quick take-up brake master cylinder assembly according to claim 1, characterised in that the valve housing (84) and the support means (80) have mating threads (94) formed thereon, with the valve housing (84) being secured to the support means (80) by the mating threads (84).

　　　3.　A quick take-up brake master cylinder assembly according to claim 2, characterised in that the valve housing (84) has a flange which extends radially outwardly relative to the generally cylindrical wall portion (38) and operatively engages the reservoir housing (14) and causes sealing means (70) to seal the reservoir chamber (68) and the recess (82) in the support means (80) against leakage between the reservoir housing (14) and the support means (80), the flange being held in operative engagement with the reservoir housing (14) and the support means (80) by the said mating threads (84).

4.  A quick take-up brake master cylinder assembly according to any one of claims 1 to 3, characterised in that one of the valve members of the first and second brake fluid pressure and flow control valves (54 and 22) comprises an O-ring seal 130 elastically stretched about the generally cylindrical wall portion (38), and a grooved valve seat (128) extending circumferentially about the generally cylindrical wall portion (38) and receiving the O-ring seal (130) therein, and that at least one (134) of the passage means (106 and 134) extends from the valve chamber (122) outwardly through the generally cylindrical wall portion (38) and terminates in the base of the grooved valve seat (128) so that it is closed by the O-ring seal (130) when the O-ring seal (130) is in engagement with the grooved valve seat (128) at the said termination, and is opened by pressure in the valve chamber (40) acting therethrough on the O-ring seal (130) to stretch the O-ring seal (130) away from the grooved seat (128) at the passage means (134) termination.

5.  A quick take-up brake master cylinder assembly according to any one of claims 1 to 2, characterised in that the valve member of one (22) of the first and second brake fluid pressure and flow control valves (54 and 22) comprises an umbrella check valve (22) secured to the valve housing (84) and covering at least one (58) of the passage means (46 and 58) so that the said at least one (58) of the passage means (46 and 58) is closed by the umbrella check valve (22) and held closed by the resilience of the umbrella check valve (22) and is opened by pressure on the opposite side of the valve housing (84) from the umbrella check valve (22), the valve seat for the umbrella check valve (22) surrounding the said at least one (58) of the passage means (46 and 58) controlled by the umbrella check valve (22).

6. A quick take-up brake master cylinder assembly according to claim 4 or 5, characterised in that the valve member of the other (54) of the first and second brake fluid pressure and flow control valves (54 and 22) comprises a unitary valve spring and valve member (54) forming the movable part of the said other valve (54), the said valve member (54) being formed on the free end of a cantilever-type valve spring and co-operating with its associated valve seat, one (54) of the said valve member (54) and the valve seat having a continuously open restricted flow passage (56) formed therein which by-passes the other (22) of the valves (22 and 54) between the reservoir chamber (68) and the valve chamber (40) and provides a controlled leak accommodating delayed pressure equalization between the reservoir chamber (68) and the valve chamber (40) under static pressure conditions.

7. A quick take-up brake master cylinder assembly according to any one of claims 1 to 6, characterised in that the valve housing (84) of the quick take-up fluid pressure and flow control valve assembly (84) is secured in the support means (80), the cap portion (36) which forms an end cover closing the upper end of the valve chamber (40) formed by the generally cylindrical wall portion (38) of the valve housing (84) comprises a generally flat body portion, the said at least two passages (46 and 58) formed through the valve housing (84) comprise first and second passages respectively formed through the flat body portion (36) and the generally cylindrical wall portion (38), and the first and second brake fluid pressure and flow control valves (54 and 22) in their closed positions substantially prevent brake fluid pressure communication and flow between the valve chamber (40) and the reservoir chamber (68) through the respective passages (46 and 58) and in their open positions permit brake fluid pressure communication and flow between the valve chamber (40) and the reservoir chamber (68).

Fig.1

Fig.2

Fig.3

Fig.4

Fig.5